# EUROPEAN PATENT APPLICATION

(11) **EP 4 664 634 A1**
(43) Date of publication of application: **17.12.2025**
(21) Application number: 23941403.0
(22) Date of filing: 20.12.2023
(51) Int. Cl.: H01M 50/242, B62D 21/15

(54) **BATTERY AND VEHICLE**

(30) Priority: 13.06.2023 CN 202310699337
(71) Applicant: Contemporary Amperex Technology Co., Limited, Ningde, Fujian 352100 (CN)
(72) Inventor: ZHANG, Wenhui, Ningde, Fujian 352100 (CN); LONG, Chao, Ningde, Fujian 352100 (CN); CHEN, Xingdi, Ningde, Fujian 352100 (CN); WANG, Peng, Ningde, Fujian 352100 (CN)
(74) Representative: Ziebig Hengelhaupt Intellectual Property Attorneys Patentanwaltskanzlei PartGmbB
(86) International application number: PCT/CN2023/140122
(87) International publication number: WO 2024/255183

(57) **Abstract**

A battery (100) and a vehicle (1000) are provided. The battery (100) includes: at least one battery cell (17), a box (1), and a buffer structure (23). The battery cell (17) is arranged in the box (1). The buffer structure (23) is fixedly connected to the box (1), and the buffer structure (23) protrudes out of a side wall of the box (1).

## Description

### CROSS-REFERENCE TO RELATED APPLICATIONS

The present application is based upon and claims priority to Chinese Patent Application No. 202310699337.5 filed on June 13, 2023, which is incorporated by reference in its entirety.

### TECHNICAL FIELD

The present application relates to the field of battery technologies, and in particular, to a battery and a vehicle.

### BACKGROUND

In the related art, when an outer peripheral side of a battery is subjected to a collision or scratch, the battery is easily damaged, which affects the operating performance of the battery, reduces the safety and reliability of the battery, and affects the service life of the battery.

### SUMMARY OF THE INVENTION

The present application provides a battery and a vehicle. When an outer peripheral side of the battery is subjected to a collision, a buffer structure can absorb part of collision energy, thereby reducing the possibility of the battery being damaged when subjected to a force, thereby improving the safety performance of the battery.

In a first aspect, the present application provides a battery, including: at least one battery cell; a box, where the battery cell is arranged in the box; and a buffer structure fixedly connected to the box and protruding out of a side wall of the box.

In the above technical solution, the buffer structure is fixedly connected to the box, and the buffer structure protrudes out of the side wall of the box. When the outer peripheral side of the battery is subjected to a collision, the buffer structure is subjected to a force, and the buffer structure can absorb part of the collision energy, so that the force transmitted to the box becomes smaller, which can reduce the possibility of the box being damaged when subjected to a force, thereby improving the safety and reliability of the battery and reducing the impact on the service life of the battery.

In some embodiments, the box includes a box main body and a bottom plate, the box main body and the bottom plate are fixedly connected, an accommodating cavity is formed between the box main body and the bottom plate, and the at least one battery cell is arranged in the accommodating cavity. The buffer structure is fixedly connected to the bottom plate.

In the above technical solution, the buffer structure is fixedly connected to the bottom plate, and the buffer structure protects the bottom plate. When the outer peripheral side of the box is subjected to a collision, the buffer structure is subjected to a force and absorbs part of the collision energy, and the force applied to the bottom plate is small, which can reduce the possibility of the bottom plate being damaged when subjected to a force.

In some embodiments, the buffer structure includes a connecting portion and a buffer portion, the connecting portion is fixedly connected between the bottom plate and the buffer portion, the buffer portion and the side wall of the box are arranged opposite to each other, and a buffer space provided for deformation of the buffer portion is formed between the buffer portion and the side wall of the box.

In the above technical solution, the buffer space provided for deformation of the buffer portion is formed between the buffer portion and the side wall of the box. When the outer peripheral side of the battery is subjected to a collision, the buffer portion is subjected to a force, and the buffer portion deforms to absorb part of the collision energy, so that the force transmitted to the box becomes smaller, which can reduce the possibility of the box being damaged when subjected to a force, thereby further improving the safety and reliability of the battery and reducing the impact on the service life of the battery.

In some embodiments, a direction perpendicular to the side wall is a width direction of the buffer space, and a width of the buffer space is 5 mm to 30 mm.

In the above technical solution, the width of the buffer space is not less than 5 mm, so that the buffer space can absorb more collision energy and better protect the box. In addition, the width of the buffer space is not greater than 30 mm, while ensuring the energy-absorbing effect of the buffer space, it also helps reduce the volume of the battery and reduce the space occupied by the battery.

In some embodiments, a direction perpendicular to the bottom plate is a height direction of the buffer space, and a height of the buffer space is 5 mm to 30 mm.

In the above technical solution, the height of the buffer space is not less than 5 mm, so that a protective height of the buffer structure is high, and the buffer structure can protect the box in a larger range, which further reduces the possibility of the box being damaged when subjected to a force. The height of the buffer space is not greater than 30 mm, while increasing the protection range of the buffer structure for the box, it also helps reduce the material used in the buffer structure, thereby being conducive to reducing the overall weight of the battery.

In some embodiments, the connecting portion extends in an arc shape in a direction from the buffer portion to the bottom plate.

In the above technical solution, when the outer peripheral side of the battery is subjected to a collision, the buffer portion is subjected to a force and absorbs part of the collision energy. The connecting portion can transmit the force applied to the buffer portion to the bottom plate, so that the force applied to the box main body is small, which can reduce the possibility of damage to the box main body when subjected to a force. In addition, the connecting portion extending in the arc shape further has a guiding function. When the buffer structure is subjected to a collision, the connecting portion can guide a collision position to the bottom plate to reduce the degree of damage to the box main body.

In some embodiments, the buffer structure and the bottom plate are formed into an integrated structure.

In the above technical solution, the buffer structure and the bottom plate are integrally formed, which can enhance the stability of the overall structure and performance of the buffer structure and the bottom plate, and can save unnecessary assembling members and connection processes, which is conducive to improving the assembling efficiency of the battery.

In some embodiments, the box main body and the bottom plate are fixedly connected via a connecting structure, and the connecting structure is detachably connected to the box main body and the bottom plate.

In the above technical solution, the connecting structure is detachably connected to the box main body and the bottom plate, which facilitates the disassembling and assembling between the box main body and the bottom plate. When the bottom plate is severely deformed or damaged, it is convenient to detach the bottom plate for maintenance and replacement, and it is also convenient to maintain the box main body and the battery cell.

In some embodiments, a threaded hole is formed in the box main body, a through hole is formed in the bottom plate, and the connecting structure is a screw. The connecting structure passes through the through hole and is threadedly connected to the box main body through the threaded hole.

In the above technical solution, the bottom plate can be fixedly connected to the box main body by the threaded connection between the connecting structure and the box main body, and can be easily detached, thereby further improving the convenience of maintenance of the battery.

In some embodiments, a head of the connecting structure protrudes out of a bottom surface of the bottom plate, a direction perpendicular to the bottom plate is a height direction of the connecting structure, and a height dimension of the head is less than or equal to 6 mm.

In the above technical solution, by making the height dimension of the head of the connecting structure no greater than 6 mm, when the battery is subjected to a collision, the possibility of the connecting structure being squeezed by the collision can be reduced, thereby reducing the possibility of the damage to the battery caused by deformation of the connecting structure after being subjected to a force, thus further improving the safety and reliability of the battery.

In some embodiments, the box main body includes a side beam constituting the side wall, a hollow cavity is formed in the side beam, a connecting nut is provided in the hollow cavity, the connecting nut is provided with the threaded hole, a mounting hole in communication with the hollow cavity is formed in a bottom surface of the side beam, and the connecting nut is riveted to the side beam through the mounting hole.

In the above technical solution, the connecting nut is riveted to the side beam through the mounting hole, which is convenient for operation, so that the connection between the connecting nut and the side beam is strong in stability. The stability of the connection between the bottom plate and the box main body can be further enhanced by threadedly connecting the connecting structure to the connecting nut.

In some embodiments, a first sealing member is arranged between a bottom surface of the box main body and the bottom plate.

In the above technical solution, the first sealing member can enhance the sealing performance between the bottom surface of the box main body and the bottom plate, thereby enhancing the air tightness of the battery and further improving the safety of the battery.

In some embodiments, the buffer structure is provided with an avoidance notch, and the avoidance notch is used to avoid an installation structure of the battery.

In the above technical solution, the avoidance notch avoids the installation structure of the battery, so that the installation of the battery is more convenient and is easy to operate. For example, when the battery is installed on a vehicle body, the avoidance notch can avoid an installation structure connecting the battery to the vehicle body, so that it is convenient to disassemble and assemble the battery on the vehicle body.

In some embodiments, the battery cell is spaced apart from the side wall of the box.

In the above technical solution, the side wall of the box is spaced apart from the battery cell, so that the transmission of the force between the side wall of the box and the battery cell can be blocked. For example, when the side wall of the box is subjected to a collision force, the side wall of the box is less likely to transmit the collision force to the battery cell, which can improve the safety of the battery cell. Moreover, the side wall of the box is spaced apart from the battery cell, so that the side wall of the box has deformation space. When the side wall of the box is deformed when subjected to a force, the possibility of the side wall of the box squeezing the battery cell can be reduced, which can further improve the safety and reliability of the battery.

In some embodiments, the box includes a box main body and a bottom plate, the box main body and the bottom plate are fixedly connected, an accommodating cavity is formed between the box main body and the bottom plate, and the at least one battery cell is arranged in the accommodating cavity. A bottom surface of the battery cell is spaced apart from the bottom plate.

In the above technical solution, the bottom surface of the battery cell is spaced apart from the bottom plate, and a buffer energy-absorbing space is provided between the bottom plate and the battery cell. When the bottom plate is subjected to a force, the bottom plate can be deformed to absorb part of the energy. The buffer energy-absorbing space can absorb part of the collision energy, thereby reducing the possibility of the bottom plate squeezing the battery cell, and further improving the safety of the battery cell.

In some embodiments, a distance between the bottom surface of the battery cell and the bottom plate is 10 mm to 25 mm.

In the above technical solution, the distance between the bottom surface of the battery cell and the bottom plate is not less than 10 mm, so that sufficient deformation space can be left for the bottom plate to reduce the possibility of squeezing the battery cell when the bottom plate is deformed when subjected to a force, thereby improving the safety of the battery cell. The distance between the bottom surface of the battery cell and the bottom plate is not greater than 25 mm, which is conducive to reducing the overall volume of the battery.

In some embodiments, an accommodating cavity for accommodating the battery cell is formed in the box, and the box includes a side beam constituting the side wall. The side beam includes a first side beam, a second side beam, a third side beam, and a fourth side beam arranged sequentially in a circumferential direction of the box. A first hollow cavity isolated from the external environment is formed in the first side beam, a second hollow cavity isolated from the external environment is formed in at least one of the second side beam and the fourth side beam, and the first hollow cavity is in communication with the second hollow cavity. A wire passing hole in communication with the accommodating cavity is formed in the side wall of the second hollow cavity facing the accommodating cavity, the wire passing hole is used for passing a wiring harness of the battery, and the buffer structure protrudes out of the first side beam.

In the above technical solution, the first hollow cavity and the second hollow cavity are both isolated from the external environment, so that the air tightness of the battery can be enhanced. The buffer structure protrudes out of the first side beam, and when the outer peripheral side of the battery is subjected to a collision or scratch, the buffer structure is subjected to a force, and the buffer structure can absorb part of the collision energy, so that the force transmitted to the first side beam becomes smaller, which can reduce the possibility of the first side beam being damaged when subjected to a force, thereby improving the sealing performance of the first hollow cavity, and improving the air tightness of the battery.

In some embodiments, a baffle is arranged between the first hollow cavity and the second hollow cavity to isolate the first hollow cavity from the second hollow cavity.

In the above technical solution, the baffle is arranged between the first hollow cavity and the second hollow cavity to isolate the first hollow cavity from the second hollow cavity. When the first side beam is damaged or cracked by collision, the first hollow cavity is in communication with the external environment, and the second hollow cavity is still isolated from the external environment. In this way, the possibility of the accommodating cavity being in communication with the external environment is small, which can improve the air tightness of the battery, thereby improving the safety performance of the battery.

In some embodiments, the box includes a top cover and a side beam constituting the side wall, the top cover covers a top portion of the side beam, the battery cell is inverted, and the battery cell is connected to the top cover.

In the above technical solution, by connecting the battery cell to the top cover, the structural strength of the top of the battery can be increased, the deformation of the top cover can be reduced when the battery is subjected to a force, thereby improving the safety and reliability of the battery. For example, when the battery is a Cell to Body (CTB) battery, the top cover of the battery can constitute a floor of a vehicle, and the structural strength of the floor of the vehicle can be enhanced by connecting the upper part of the battery cell to the top cover.

In some embodiments, an adhesive layer is arranged between an upper surface of the battery cell and the top cover to connect the battery cell and the top cover.

In the above technical solution, the battery cell and the top cover are connected via the adhesive layer, so that the battery cell and the top cover have good connection stability and a simple connection method.

In some embodiments, an accommodating cavity for accommodating the battery cell is formed in the box, the box includes a top cover and a side beam constituting the side wall, the top cover covers a top portion of the side beam, and a second sealing member is arranged between the top cover and a top surface of the side beam.

In the above technical solution, the second sealing member is arranged between the top cover and the top surface of the side beam, which can enhance the sealing performance between the top cover and the side beam, thereby further enhancing the air tightness of the battery.

In a second aspect, the present application proposes a vehicle, including: a vehicle body; and the above-mentioned battery, where the battery is fixedly mounted on the vehicle body.

In the above technical solution, by adopting the above-mentioned battery, the buffer structure is fixedly connected to the box, and the buffer structure protrudes out of the side wall of the box. When the outer peripheral side of the battery is subjected to a collision, the buffer structure is subjected to a force, and the buffer structure can absorb part of the collision energy, so that the force transmitted to the box becomes smaller, which can reduce the possibility of the box being damaged when subjected to a force, thereby improving the safety and reliability of the battery and reducing the impact on the service life of the battery.

In some embodiments, the vehicle has a vehicle head, and the buffer structure is fixedly connected to an end of the box close to the vehicle head.

In the above technical solution, the buffer structure is fixedly connected to the end of the box close to the vehicle head. When the battery is subjected to a collision, the buffer structure is subjected to a force, the buffer structure is subjected to the force, and the buffer structure can absorb part of the collision energy, so that the force transmitted to the box becomes smaller, which can reduce the possibility of the box being damaged when subjected to a force, thereby improving the safety and reliability of the battery and reducing the impact on the service life of the battery.

Additional aspects and advantages of the present application will be provided partially in the following descriptions, will partially become apparent from the following descriptions, or will be known through practices of the present application.

### BRIEF DESCRIPTION OF DRAWINGS

The above and/or additional aspects and advantages of the present application will become obvious and easy understanding from the descriptions on embodiments with reference to the accompanying drawings, wherein:
FIG. 1 is an exploded schematic diagram of a box according to some embodiments of the present application;
FIG. 2 is an enlarged diagram of A in FIG. 1;
FIG. 3 is a sectional diagram of a battery according to some embodiments of the present application;
FIG. 4 is an enlarged diagram of a partial structure in FIG. 3; and
FIG. 5 is a schematic structural diagram of a vehicle according to some embodiments of the present application.

List of reference numerals:
1000. Vehicle;
100. Battery; 200. Vehicle body; 300. Vehicle head;
1. Box; 10. Box main body; 11. Top cover; 12. Side beam; 1a. Hollow cavity; 121. Mounting hole; 13. First side beam; 131. First hollow cavity; 14. Second side beam; 15. Fourth side beam; 16. Third side beam; 17. Battery cell; 171. Electrode terminal; 172. Battery cell body;
2. Bottom plate; 201. Through hole; 23. Buffer structure; 231. Buffer portion; 232. Connecting portion; 233. Inner surface; 234. Upper end surface; 24. Avoidance notch;
3. Buffer space; 4. Connecting structure; 40. Head; 41. Lower end surface; 42. Locking surface; 5. Connecting nut; 51. Threaded hole; 6. First sealing member; 7. Accommodating cavity.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application shall have the same meanings as those generally understood by those skilled in the art of the present application. The terms used in the present application in the specification of application are merely for the purpose of describing specific embodiments and are not intended to limit the present application. The terms "include" and "have" and any variations thereof in the specification and claims and the above brief description of the drawings of the present application are intended to cover non-exclusive inclusion. The terms "first," "second," etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width, and other dimensions of the various components in the embodiments of the present application shown in the drawings, as well as the overall thickness, length, width, and other dimensions of an integrated apparatus, are for illustrative purposes only, and should not constitute any limitation to the present application.

"A plurality of" appearing in the present application means two or more (including two).

In the present application, the battery 100 refers to a single physical module that includes one or a plurality of battery cells 17 to provide higher voltage and capacity. For example, the battery 100 mentioned in the present application may include a battery module, a battery pack, or the like. Some batteries 100 may each include a battery box for encapsulating one or a plurality of battery cells 17 or a plurality of battery modules. The battery box can prevent liquid or other foreign matters from affecting charging or discharging of the battery cell 17.

In the present application, the battery cell 17 may include a lithium-ion secondary battery, a lithium-ion battery, a lithium-sulfur battery, a sodium-lithium-ion battery, a sodium-ion battery, a magnesium-ion battery, or the like, which is not limited in embodiments of the present application. The battery cell 17 may be in a cylindrical shape, a flat shape, a cuboid shape, or another shape, which is also not limited in the embodiments of the present application. The battery cell 17 is generally classified into three kinds according to encapsulating methods: a cylindrical battery cell, a square battery cell, and a pouch cell, which is also not limited in embodiments of the present application.

In the related art, when an outer peripheral side of a battery is subjected to a collision or scratch, the battery is easily damaged, which may affect the operating performance of the battery, reduce the safety and reliability of the battery, and reduce the service life of the battery.

Based on this, the applicant provides a battery 100. The battery 100 includes: at least one battery cell 17, a box 1, and a buffer structure 23. The battery cell 17 is arranged in the box 1. The buffer structure 23 is fixedly connected to the box 1, and the buffer structure 23 protrudes out of a side wall of the box 1.

In the battery 100 of the above structure, the buffer structure 23 is fixedly connected to the box 1, and the buffer structure 23 protrudes out of the side wall of the box 1. When the outer peripheral side of the battery 100 is subjected to a collision, the buffer structure 23 is subjected to a force, and the buffer structure 23 can absorb part of the collision energy, so that the force transmitted to the box 1 becomes smaller, which can reduce the possibility of the box 1 being damaged when subjected to a force, thereby improving the safety and reliability of the battery 100 and reducing the impact on the service life of the battery 100.

A vehicle 1000 disclosed in the embodiments of the present application may be a fuel vehicle, a gas vehicle, or a new energy vehicle. The new energy vehicle may be an all-electric vehicle, a hybrid vehicle, an extended-range electric vehicle, or the like.

The battery 100 according to the embodiments of the present application will be described in detail below with reference to the accompanying drawings.

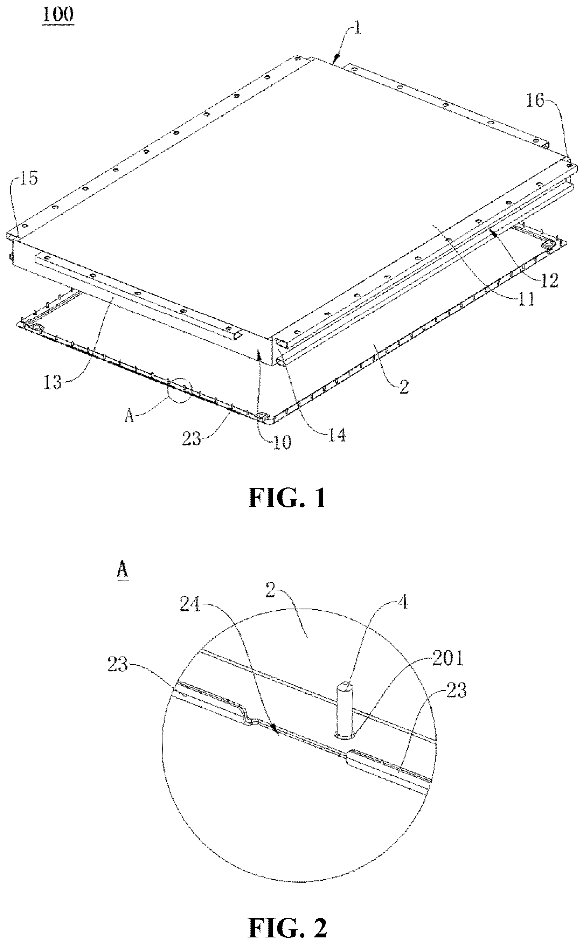

As shown in FIG. 1 to FIG. 4, in a first aspect, the present application provides a battery 100. The battery 100 includes: at least one battery cell 17, a box 1, and a buffer structure 23. The battery cell 17 is arranged in the box 1. The buffer structure 23 is fixedly connected to the box 1, and the buffer structure 23 protrudes out of a side wall of the box 1.

Optionally, the battery 100 may be applied in the vehicle 1000, and the battery 100 may be arranged at the bottom or head or tail of the vehicle 1000.

The battery 100 including at least one battery cell 17 means that the battery 100 includes one battery cell 17; or, the battery 100 includes a plurality of battery cells 17.

In the above technical solution, the buffer structure 23 is fixedly connected to the box 1, and the buffer structure 23 protrudes out of the side wall of the box 1. When the outer peripheral side of the battery 100 is subjected to a collision, the buffer structure 23 is subjected to a force and the buffer structure 23 can absorb part of the collision energy, so that the force transmitted to the box 1 becomes smaller, which can reduce the possibility of the box 1 being damaged when subjected to a force, thereby improving the safety and reliability of the battery 100 and reducing the impact on the service life of the battery 100.

In some embodiments, referring to FIG. 1, the box 1 includes a box main body 10 and a bottom plate 2, the box main body 1 and the bottom plate 2 are fixedly connected, an accommodating cavity 7 is formed between the box main body 10 and the bottom plate 2, and the at least one battery cell 17 is arranged in the accommodating cavity 7. The buffer structure 23 is fixedly connected to the bottom plate 2.

Optionally, the bottom plate 2 according to some embodiments of the present application may constitute a bottom wall of the box 1, and the bottom plate 2 may be made of a metal material having a relatively high strength, including but not limited to steel, so that the bottom plate 2 has a relatively high structural strength.

At least one battery cell 17 being arranged in the accommodating cavity 7 means that one battery cell 17 is arranged in the accommodating cavity 7; or two, three, four, or more than four battery cells 17 are arranged in the accommodating cavity 7.

In the above technical solution, the buffer structure 23 is fixedly connected to the bottom plate 2, and the buffer structure 23 protects the bottom plate 2. When the outer peripheral side of the box 1 is subjected to a collision, the buffer structure 23 is subjected to a force and absorbs part of the collision energy, and the force applied to the bottom plate 2 is small, which can reduce the possibility of the bottom plate 2 being damaged when subjected to a force.

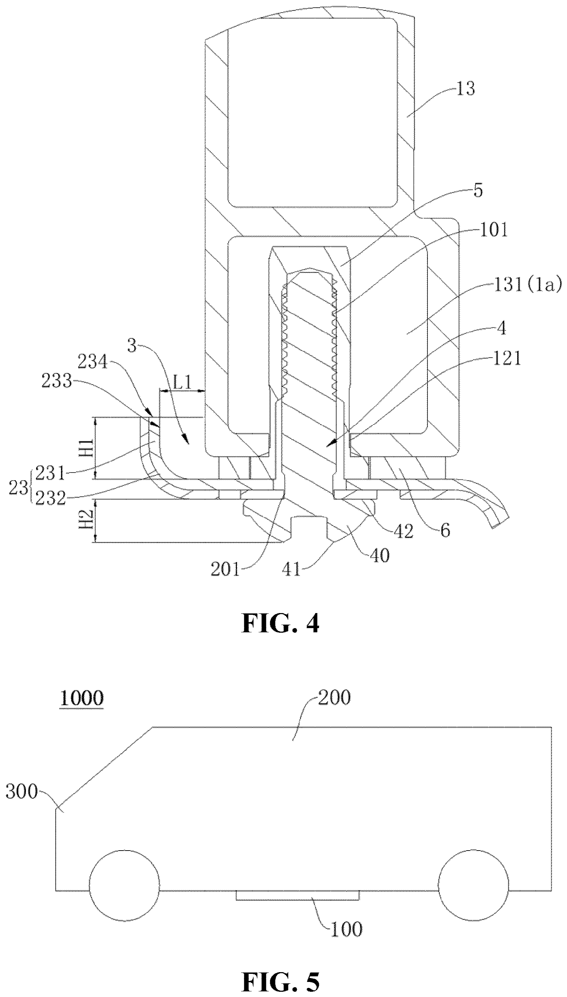

In some embodiments, referring to FIG. 4, the buffer structure 23 includes a connecting portion 232 and a buffer portion 231, the connecting portion 232 is fixedly connected between the bottom plate 2 and the buffer portion 231, the buffer portion 231 and the side wall of the box 1 are arranged opposite to each other, and a buffer space 3 provided for deformation of the buffer portion 231 is formed between the buffer portion 231 and the side wall of the box 1.

In the above technical solution, the buffer space provided for deformation of the buffer portion 231 is formed between the buffer portion 231 and the side wall of the box 1. When the outer peripheral side of the battery 100 is subjected to a collision, the buffer portion 231 is subjected to a force, and the buffer portion 231 deforms to absorb part of the collision energy, so that the force transmitted to the box 1 becomes smaller, which can reduce the possibility of the box 1 being damaged when subjected to a force, thereby further improving the safety and reliability of the battery 100 and reducing the impact on the service life of the battery 100.

In some embodiments, referring to FIG. 4, a direction perpendicular to the side wall is a width direction of the buffer space 3, and a width L1 of the buffer space 3 is 5 mm to 30 mm.

For example, the width L1 of the buffer space 3 may be 8 mm, 10 mm, 15 mm, or 17 mm.

A surface of the buffer portion 231 facing the side wall of the box 1 is an inner surface 233 of the buffer portion 231, and the width L1 of the buffer space 3 can be measured by using the following methods: when the battery 100 is in a normal state and the buffer structure 23 is not deformed by an external force, a distance between the inner surface 233 of the buffer portion 231 and the side wall of the box 1 in the width direction of the buffer space 3 is measured, and at least three different position points on the inner surface 233 of the buffer portion 231 can be selected to measure the distance between the inner surface 233 of the buffer portion 231 and the side wall of the box 1 in the width direction of the buffer space 3, and an average value of the distances obtained by measuring the above-mentioned at least three different position points is calculated. The average value is the measured width L1 of the buffer space 3, and the average value is within the above-mentioned range of 5 mm to 30 mm.

In the above technical solution, the width L1 of the buffer space 3 is not less than 5 mm, so that the buffer space 3 can absorb more collision energy and better protect the box 1. In addition, the width L1 of the buffer space 3 is not greater than 30 mm, while ensuring the energy-absorbing effect of the buffer space 3, it also helps reduce the volume of the battery 100 and reduce the space occupied by the battery 100.

In some embodiments, referring to FIG. 4, a direction perpendicular to the bottom plate 2 is a height direction of the buffer space 3, and a height H1 of the buffer space 3 is 5 mm to 30 mm.

For example, the height H1 of the buffer space 3 may be 8 mm, 10 mm, 15 mm, or 17 mm.

A surface of the buffer portion 231 facing upward is an upper end surface 234 of the buffer portion 231, and the height H1 of the buffer space 3 can be measured by using the following methods: when the battery 100 is in a normal state and the buffer structure 23 is not deformed by an external force, a perpendicular distance between the upper end surface 234 of the buffer portion 231 and an upper wall of the bottom plate 2 in the height direction of the buffer space 3 is measured, and at least three different position points on the upper end surface 234 of the buffer portion 231 can be selected to measure the perpendicular distance between the upper end surface 234 of the buffer portion 231 and the upper surface of the bottom plate 2 in the height direction of the buffer space 3, and an average value of the distances obtained by measuring the above-mentioned at least three different position points is calculated. The average value is the measured height H1 of the buffer space 3, and the average value is within the above-mentioned range of 5 mm to 30 mm.

In the above technical solution, the height H1 of the buffer space 3 is not less than 5 mm, so that a protective height of the buffer structure 23 is high, and the buffer structure 23 can protect the box 1 in a larger range, which further reduces the possibility of the box 1 being damaged when subjected to a force. The height H1 of the buffer space 3 is not greater than 30 mm, while increasing the protection range of the buffer structure 23 for the box 1, it also helps reduce the material used in the buffer structure 2, thereby being conducive to reducing the overall weight of the battery 100.

In some embodiments, referring to FIG. 4, the connecting portion 232 extends in an arc shape in a direction from the buffer portion 231 to the bottom plate 2.

In the above technical solution, when the outer peripheral side of the battery 100 is subjected to a collision, the buffer portion 231 is subjected to a force and absorbs part of the collision energy. The connecting portion 232 can transmit the force applied to the buffer portion 231 to the bottom plate 2, so that the force applied to the box main body 10 is small, which can reduce the possibility of damage to the box main body 10 when subjected to the force. In addition, the connecting portion 232 extending in the arc shape further has a guiding function. When the buffer structure 23 is subjected to a collision, the connecting portion 232 can guide a collision position to the bottom plate 2 to reduce the degree of damage to the box main body 10.

In some embodiments, referring to FIG. 4, the buffer structure 23 and the bottom plate 2 are formed into an integrated structure.

In the above technical solution, the buffer structure 23 and the bottom plate 2 are integrally formed, which can enhance the stability of the overall structure and performance of the buffer structure 23 and the bottom plate 2, and can save unnecessary assembling members and connection processes, which is conducive to improving the assembling efficiency of the battery 100.

In some embodiments, referring to FIG. 1 to FIG. 4, the box main body 10 and the bottom plate 2 are fixedly connected via a connecting structure 4, and the connecting structure 4 is detachably connected to the box main body 10 and the bottom plate 2.

In the above technical solution, the connecting structure 4 is detachably connected to the box main body 10 and the bottom plate 2, which facilitates the disassembling and assembling between the box main body 10 and the bottom plate 2. When the bottom plate 2 is severely deformed or damaged, it is convenient to detach the bottom plate 2 for maintenance and replacement, and it is also convenient to maintain the box main body 10 and the battery cell 17.

In some embodiments, referring to FIG. 4, a threaded hole 51 is formed in the box main body 10, a through hole 201 is formed in the bottom plate 2, and the connecting structure 4 is a screw. The connecting structure 4 passes through the through hole 201 and is threadedly connected to the box main body 10 through the threaded hole 51.

In the above technical solution, the bottom plate 20 can be fixedly connected to the box main body 10 by the threaded connection between the connecting structure 4 and the box main body 10, and can be easily detached, thereby further improving the convenience of maintenance of the battery 100.

In some embodiments, referring to FIG. 4, a head of the connecting structure 4 protrudes out of a bottom surface of the bottom plate 2, the direction perpendicular to the bottom plate 2 is a height direction of the connecting structure 4, and a height dimension H2 of the head is less than or equal to 6 mm.

For example, the height H2 of the head of the connecting structure 4 may be 6 mm, 5 mm, 4 mm, or 3 mm.

A surface of the head 40 of the connecting structure 4 facing downward is a lower end surface 41 of the head 40, a surface of the bottom plate 2 facing downward is a bottom surface of the bottom plate 2, a surface of the head 40 that abuts against or is in contact with the bottom surface of the bottom plate 2 is a locking surface 42 of the head 40, and the height dimension H2 of the head 40 of the connecting structure 4 can be measured by using the following method: when the battery 100 is in a normal state, a perpendicular distance between the lower end surface 41 of the head 40 and the locking surface 42 is measured, at least three different position points on the lower end surface 41 of the head 40 may be selected to measure the perpendicular distance between the lower end surface 41 of the head 40 and the locking surface 42, and a maximum value of the distances obtained by measuring the at least three different position points is calculated. The maximum value is the measured height H2 of the head 40 of the connecting structure 4, and the maximum value is less than or equal to 6 mm.

It is understandable that when the battery 100 is subjected to a collision by an obstacle, the larger the height dimension of the head of the connecting structure 4 is, the easier it is for the head of the connecting structure 4 to contact with the obstacle. In this way, the obstacle directly squeezes the head of the connecting structure 4, which can easily cause the connecting structure 4 to be severely deformed or even broken, affecting the stability of the connection between the bottom plate 2 and the box 10, and also easily affecting the safety and service life of the battery 100.

In the above technical solution, by making the height dimension H2 of the head of the connecting structure 4 no greater than 6 mm, when the battery 100 is subjected to a collision, the possibility of the connecting structure 4 being squeezed by the collision can be reduced, thereby reducing the possibility of the damage to the battery 100 caused by deformation of the connecting structure 4 after being subjected to a force, thus further improving the safety and reliability of the battery 100.

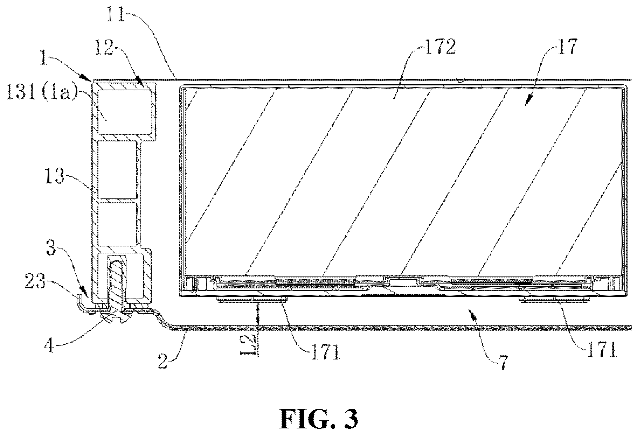

In some embodiments, referring to FIG. 3 and FIG. 4, the box main body 10 includes a side beam 12 constituting the side wall, a hollow cavity 1a is formed in the side beam 12, a connecting nut 5 is provided in the hollow cavity 1a, the connecting nut 5 is provided with the threaded hole 51, a mounting hole in communication with the hollow cavity 1a is formed in a bottom surface of the side beam, and the connecting nut is riveted to the side beam through the mounting hole.

For example, the connecting nut 5 may be a pull rivet nut.

In the above technical solution, the connecting nut 5 is riveted to the side beam 12 through the mounting hole 121, which is convenient for operation, so that the connection between the connecting nut 5 and the side beam 12 is strong in stability. The stability of the connection between the bottom plate 2 and the box main body 10 can be further enhanced by threadedly connecting the connecting structure 4 to the connecting nut 5.

In some embodiments, referring to FIG. 4, a first sealing member 6 is arranged between a bottom surface of the box main body 10 and the bottom plate 2.

In the above technical solution, the first sealing member 6 can enhance the sealing performance between the bottom surface of the box main body 10 and the bottom plate 2, thereby enhancing the air tightness of the battery 100 and further improving the safety of the battery 100.

In some embodiments, referring to FIG. 1 and FIG. 2, the buffer structure 23 is provided with an avoidance notch 24, and the avoidance notch 24 is used to avoid an installation structure of the battery 100.

In the above technical solution, the avoidance notch 24 avoids the installation structure of the battery 100, so that the installation of the battery 100 is more convenient and is easy to operate. For example, when the battery 100 is installed on a vehicle body, the avoidance notch 24 can avoid an installation structure connecting the battery 100 and the vehicle body, so that it is convenient to disassemble and assemble the battery 100 on the vehicle body.

In some embodiments, referring to FIG. 3, the battery cell 17 is spaced apart from the side wall of the box 1.

In the above technical solution, the side wall of the box 1 is spaced apart from the battery cell 17, so that the transmission of the force between the side wall of the box 1 and the battery cell 17 can be blocked. For example, when the side wall of the box 1 is subjected to a collision force, the side wall of the box 1 is less likely to transmit the collision force to the battery cell 17, which can improve the safety of the battery cell 17. Moreover, the side wall of the box 1 is spaced apart from the battery cell 17, so that the side wall of the box 1 has deformation space. When the side wall of the box 1 is deformed when subjected to a force, the possibility of the side wall of the box 1 squeezing the battery cell 17 can be reduced, which can further improve the safety and reliability of the battery 100.

In some embodiments, referring to FIG. 1 to FIG. 3, the box 1 includes a box main body 10 and a bottom plate 2, the box main body 10 and the bottom plate 2 are fixedly connected, an accommodating cavity 7 is formed between the box main body 1 and the bottom plate 2, and the at least one battery cell 17 is arranged in the accommodating cavity 7. A bottom surface of the battery cell 17 is spaced apart from the bottom plate 2.

At least one battery cell being arranged in the accommodating cavity means that one battery cell 17 is arranged in the accommodating cavity 7; or a plurality of battery cells 17 are arranged in the accommodating cavity 7.

In the above technical solution, the bottom surface of the battery cell 17 is spaced apart from the bottom plate 2, and a buffer energy-absorbing space is provided between the bottom plate 2 and the battery cell 17. When the bottom plate 2 is subjected to a force, the bottom plate 2 can be deformed to absorb part of the energy. The buffer energy-absorbing space can absorb part of the collision energy, thereby reducing the possibility of the bottom plate 2 squeezing the battery cell 17, and further improving the safety of the battery cell 17.

In some embodiments, referring to FIG. 3, a distance L2 between the bottom surface of the battery cell 17 and the bottom plate 2 is 10 mm to 25 mm.

For example, the distance L2 between the bottom surface of the battery cell 17 and the bottom plate may be 13 mm 14 mm, 16 mm, or 20 mm.

Optionally, the battery cell 17 includes a battery cell body 172 and an electrode terminal 171, and the electrode terminal 171 is located on one side of the battery cell body 172.

When the electrode terminal 171 is located on a bottom surface of the battery cell body 172, a surface of the electrode terminal 171 facing downward is a bottom surface of the electrode terminal 171 and can be used as the bottom surface of the battery cell 17. The distance L2 between the bottom surface of the battery cell 17 and the bottom plate can be measured by using the following method: when the battery 100 is in a normal state and the battery cell 17 and the bottom plate 2 are not deformed by an external force, a perpendicular distance between the bottom surface of the electrode terminal 171 and the upper surface of the bottom plate 2 is measured, at least three different battery cells 17 can be selected to measure the perpendicular distances between the bottom surfaces of the electrode terminals 171 of different battery cells 17 and the upper surface of the bottom plate 2, and an average value of the distances obtained by measuring the above-mentioned at least three different battery cells 17 is calculated. The average value is the measured distance L2 between the bottom surface of the battery cell 17 and the bottom plate 2, and the average value is within the above-mentioned range of 10 mm to 25 mm.

When the electrode terminal 171 is located on a side other than the bottom surface of the battery cell body 172, a surface of the battery cell body 172 facing downward is a bottom surface of the battery cell body 172 and may be used as the bottom surface of the battery cell 17. The distance L2 between the bottom surface of the battery cell 17 and the bottom plate can be measured by using the following method: when the battery 100 is in a normal state and the battery cell 17 and the bottom plate 2 are not deformed by an external force, a perpendicular distance between the bottom surface of the battery cell body 172 and the upper surface of the bottom plate 2 is measured, at least three different battery cells 17 can be selected to measure the perpendicular distances between the bottom surfaces of the different battery cells 17 and the upper surface of the bottom plate 2, and an average value of the distances obtained by measuring the above-mentioned at least three different battery cells 17 is calculated. The average value is the measured distance L2 between the bottom surface of the battery cell 17 and the bottom plate 2, and the average value is within the above-mentioned range of 10 mm to 25 mm.

In the above technical solution, the distance L2 between the bottom surface of the battery cell 17 and the bottom plate is not less than 10 mm, so that sufficient deformation space can be left for the bottom plate 2 to reduce the possibility of squeezing the battery cell 17 when the bottom plate 2 is deformed when subjected to a force, thereby improving the safety of the battery cell 17. The distance L2 between the bottom surface of the battery cell 17 and the bottom plate 2 is not greater than 25 mm, which is conducive to reducing the overall volume of the battery 100.

In some embodiments, referring to FIG. 1 to FIG. 3, an accommodating cavity 7 for accommodating the battery cell 17 is formed in the box 1, and the box 1 includes a side beam 12 constituting the side wall. The side beam 12 includes a first side beam 13, a second side beam 14, a third side beam 16, and a fourth side beam 15 arranged sequentially in a circumferential direction of the box 1. A first hollow cavity 131 isolated from the external environment is formed in the first side beam 13, a second hollow cavity isolated from the external environment is formed in at least one of the second side beam 14 and the fourth side beam 15, and the first hollow cavity 131 is in communication with the second hollow cavity. A wire passing hole in communication with the accommodating cavity 7 is formed in the side wall of the second hollow cavity facing the accommodating cavity, the wire passing hole is used for passing a wiring harness of the battery 100, and the buffer structure 23 protrudes out of the first side beam 13.

The second hollow cavity isolated from the external environment being formed in at least one of the second side beam 14 and the fourth side beam 15 may be considered as that the second hollow cavity isolated from the external environment is formed in the second side beam 14; or the second hollow cavity isolated from the external environment is formed in the fourth side beam 15; or the second hollow cavity isolated from the external environment is formed in both the second side beam 14 and the fourth side beam 15.

For example, when the battery is used in a vehicle, a front side of the battery is easily scratched to cause damage to the first side beam, and the first hollow cavity in the first side beam is in communication with the second hollow cavity, which will cause the airtightness of the battery to be destroyed.

In the above technical solution, the first hollow cavity 131 and the second hollow cavity are both isolated from the external environment, so that the air tightness of the battery 100 can be enhanced. The buffer structure 23 protrudes out of the first side beam, and when the outer peripheral side of the battery 100 is subjected to a collision or scratch, the buffer structure 23 is subjected to a force, and the buffer structure 23 can absorb part of the collision energy, so that the force transmitted to the first side beam 13 becomes smaller, which can reduce the possibility of the first side beam 13 being damaged when subjected to a force, thereby improving the sealing performance of the first hollow cavity 131, and improving the air tightness of the battery 100.

In some embodiments, a baffle is arranged between the first hollow cavity 131 and the second hollow cavity to isolate the first hollow cavity 131 from the second hollow cavity.

It is understandable that if the first side beam 13 is severely deformed or damaged, it is easy to cause the first hollow cavity 131 in the first side beam 13 to be in communication with the external environment. Since the first hollow cavity 131 is in communication with the second hollow cavity, and the second hollow cavity is in communication with the accommodating cavity 7, this will cause the accommodating cavity 7 to be in communication with the external environment, thereby affecting the airtightness of the battery 100, and the safety of the battery 100 is difficult to be guaranteed. For example, when the battery is used in a vehicle, and during driving of the vehicle 1000, when the vehicle passes through an uneven road surface or when the vehicle passes through a road surface with obstacles, the battery 100 located at the bottom of the vehicle body is easily collided or scratched, and the front side of the battery 100 is easily scratched so that the first side beam 13 is easily damaged by the collision, which can easily cause the accommodating cavity 7 to be in communication with the external environment, thereby affecting the air tightness of the battery 100.

In the above technical solution, the baffle is arranged between the first hollow cavity 131 and the second hollow cavity to isolate the first hollow cavity 131 and the second hollow cavity. When the first side beam 13 is damaged or cracked by collision, the first hollow cavity 131 is in communication with the external environment, and the second hollow cavity is still isolated from the external environment. In this way, the possibility of the accommodating cavity 7 being in communication with the external environment is small, which can improve the air tightness of the battery 100, thereby improving the safety performance of the battery 100.

In some embodiments, referring to FIG. 3, the box 1 includes a top cover 11 and a side beam 12 constituting the side wall, the top cover 11 covers a top portion of the side beam 12, the battery cell 17 is inverted, and the battery cell 17 is connected to the top cover 11.

It should be noted that the electrode terminals 171 of the above-mentioned battery cells 17 may be located on the same side of the battery cells 17. When the battery cell 17 is inverted, it can be considered that one end of the battery cell 17 having the electrode terminal 171 faces the bottom plate 2, and the other end of the battery cell 17 faces the top cover 11 and is connected to the top cover 11.

In the above technical solution, by connecting the battery cell 17 to the top cover 11, the structural strength of the top of the battery 100 can be increased, the deformation of the top cover 11 can be reduced when the battery 100 is subjected to a force, thereby improving the safety and reliability of the battery 100. For example, when the battery 100 is a Cell to Body (CTB) battery, the top cover 11 of the battery 100 can constitute a floor of a vehicle 1000, and the structural strength of the floor of the vehicle 1000 can be enhanced by connecting the upper part of the battery cell 17 to the top cover 11.

In some embodiments, an adhesive layer is arranged between an upper surface of the battery cell 17 and the top cover 11 to connect the battery cell 17 and the top cover 11.

In the above technical solution, the battery cell 17 and the top cover 11 are connected via the adhesive layer, so that the battery cell 17 and the top cover 11 have good connection stability and a simple connection method.

In some embodiments, referring to FIG. 3, an accommodating cavity 7 for accommodating the battery cell 17 is formed in the box 1, the box 1 includes a top cover 11 and a side beam 12 constituting the side wall, the top cover 11 covers a top portion of the side beam 12, and a second sealing member is arranged between the top cover 11 and a top surface of the side beam 12.

In the above technical solution, the second sealing member is arranged between the top cover 11 and the top surface of the side beam 12, which can enhance the sealing performance between the top cover 11 and the side beam 12, thereby further enhancing the air tightness of the battery 100.

Referring to FIG. 5, in a second aspect, the present application proposes a vehicle 1000, including: a vehicle body 200; and the above-mentioned battery 100, where the battery 100 is fixedly mounted on the vehicle body 200.

The battery 100 can provide electrical energy to the vehicle body 200. The battery 100 can serve as a driving power source for the vehicle body 200 and provide a driving force for the vehicle body 200.

Optionally, as shown in FIG. 5, when the battery 100 is used in the vehicle body 200, the battery 100 may be arranged at the bottom of the vehicle body 200. The battery 100 may be configured to supply power to the vehicle body 200. For example, the battery 100 may serve as an operating power source for the vehicle body 200, used for a circuit system of the vehicle body 200. The vehicle body 200 may further include a controller and a motor. The controller is configured to control the battery 100 to supply power to the motor, for example, for meeting operating power requirements when the vehicle body 200 is starting, navigating, and driving.

By using the above-mentioned battery 100, the buffer structure 23 is fixedly connected to the box 1, and the buffer structure 23 protrudes out of the side wall of the box 1. When the outer peripheral side of the battery 100 is subjected to a collision, the buffer structure 23 is subjected to a force, and the buffer structure 23 can absorb part of the collision energy, so that the force transmitted to the box 1 becomes smaller, which can reduce the possibility of the box 1 being damaged when subjected to a force, thereby improving the safety and reliability of the battery 100 and reducing the impact on the service life of the battery 100.

In some embodiments, the vehicle 1000 has a vehicle head 300, and the buffer structure 23 is fixedly connected to an end of the box 1 close to the vehicle head 300.

It is understandable that during driving of the vehicle 1000, when the vehicle 1000 passes through an uneven road surface or when the vehicle 1000 passes through a road surface with obstacles, the battery 100 located on the vehicle body is easily collided or scratched, and especially the side of the battery 100 close to the vehicle head is easily scratched, which easily affects the safety of the battery.

In the above technical solution, the buffer structure 23 is fixedly connected to the end of the box 1 close to the vehicle head 300, when the battery 100 is subjected to a collision, the buffer structure 23 is subjected to a force and the buffer structure 23 can absorb part of the collision energy, so that the force transmitted to the box 1 becomes smaller, which can reduce the possibility of the box 1 being damaged when subjected to a force, thereby improving the safety and reliability of the battery 100 and reducing the impact on the service life of the battery 100.

In some embodiments of the present application, referring to FIG. 1 to FIG. 4, the battery 100 includes a box main body 10, a buffer structure 23, and a plurality of battery cells 17. The battery cells 17 are all arranged in the box 1, and the battery cells 17 are spaced apart from a side wall of the box 1. The buffer structure 23 is fixedly connected to the box 1, and the buffer structure 23 protrudes out of the side wall of the box 1.

The box 1 includes a top cover 11, a box main body 10, and a bottom plate 2. The box main body 10 and the bottom plate 2 are fixedly connected. A accommodating cavity 7 is formed between the box main body 10 and the bottom plate 2. The plurality of battery cells 17 are arranged in the accommodating cavity 7. The bottom plate 2 is arranged at the bottom of the box main body 10, and the top cover 11 is connected to the top of the box main body 10. A second sealing member is arranged between the top cover 11 and the box main body 10. The buffer structure 23 is connected and fixed to the bottom plate 2 and is integrally formed with the bottom plate.

The box main body 10 includes a side beam 12, and the side beam 12 constitutes the side wall of the box 1. The side beam 12 is provided with a hollow cavity 1a. There may be four hollow cavities 1a arranged in sequence in a vertical direction. A mounting hole 121 in communication with the hollow cavity 1a is formed in a bottom surface of the side beam 12. The mounting hole 121 passes through a bottom wall of the hollow cavity 1a located at the bottom. A connecting nut 5 is riveted to the side beam 12 through the mounting hole 121, and the connecting nut 5 is a pull rivet nut.

The side beam 12 includes a first side beam 13, a third side beam 16, a second side beam 14, and a fourth side beam 15. The first side beam 13 is spaced apart from the battery cell 17, and the buffer structure 23 protrudes out of the first side beam 13. A first hollow cavity 131 isolated from the external environment is formed in the first side beam 13, and a second hollow cavity isolated from the external environment is formed in both the second side beam 14 and the fourth side beam 15. Left and right ends of the first side beam 13 are respectively connected to the second side beam 14 and the fourth side beam 15. The first hollow cavity 131 is in communication with the second hollow cavity. A wire passing hole in communication with the accommodating cavity 7 is formed in a side wall of the second hollow cavity facing the accommodating cavity 7. The wire passing hole is used for passing a wiring harness of the battery 100. A baffle is arranged between the first hollow cavity 131 and the second hollow cavity to isolate the first hollow cavity 131 from the second hollow cavity.

The side beam 12 and the bottom plate 2 are fixedly connected via a connecting structure 4, and the connecting structure 4 is detachably connected to the box main body 10 and the bottom plate 2. The connecting nut 5 is provided with a threaded hole 51, a through hole 201 is formed in the bottom plate 2, and the connecting structure 4 is a screw. The connecting structure 4 passes through the through hole 201 and is threadedly connected to the box main body 10 through the threaded hole 51. A first sealing member 6 is arranged between the bottom surface of the side beam 12 and the bottom plate 2. A head 40 of the connecting structure 4 protrudes out of the bottom surface of the bottom plate 2, the direction perpendicular to the bottom plate is the height direction of the connecting structure 4, and the height dimension H2 of the head 40 is less than or equal to 6 mm.

The bottom plate 2 is located below the battery cell 17 and is spaced apart from the battery cell 17. The battery cell 17 includes a battery cell body 172 and an electrode terminal 171. The battery cell 17 is inverted, and the electrode terminal 171 is located on the bottom surface of the battery cell body 172. The distance L2 between the bottom surface of the electrode terminal 171 and the bottom plate 2 is 16 mm. An adhesive layer is arranged between the upper surface of the battery cell 17 and the top cover 11 to connect the battery cell 17 and the top cover 11.

The buffer structure 23 is connected to a front edge of the bottom plate 2 and extends upward, and a buffer space 3 is defined between the buffer structure 23 and an outer peripheral side of the side beam 12. The buffer structure 23 is provided with an avoidance notch 24, and the avoidance notch 24 is used to avoid the installation structure of the battery 100. The buffer structure 23 includes a buffer portion 231 and a connecting portion 232. The buffer portion 231 is arranged opposite to and spaced apart from the side beam 13. The connecting portion 232 is connected between the buffer portion 231 and the bottom plate 2. The connecting portion 232 extends in an arc shape in a direction from the buffer portion 231 to the bottom plate 2.

The buffer portion 231 and the side beam 12 are arranged opposite to each other, and the buffer space 3 for the buffer portion 231 to deform is formed between the buffer portion 231 and the side beam 12. The direction of the buffer portion 231 perpendicular to the side beam 13 is the width direction of the buffer space 3, and the width L1 of the buffer space 3 is 5 mm to 30 mm. The direction of the buffer portion 231 perpendicular to the bottom plate 2 is the height direction of the buffer space 3, and the height H1 of the buffer space 3 is 5 mm to 30 mm.

In the above technical solution, the buffer structure 23 is fixedly connected to the box 1, and the buffer structure 23 protrudes out of the side wall of the box 1. When the outer peripheral side of the battery 100 is subjected to a collision, the buffer structure 23 is subjected to a force and the buffer structure 23 can absorb part of the collision energy, so that the force transmitted to the box 1 becomes smaller, which can reduce the possibility of the box 1 being damaged when subjected to a force, thereby improving the safety and reliability of the battery 100 and reducing the impact on the service life of the battery 100.

Reference throughout this specification to "an embodiment," "some embodiments," "schematic embodiments," "an example," "a specific example," or "some examples" means that a specific feature, structure, material, or characteristic described in connection with such embodiment or example is included in at least one embodiment or example of the present application. In the description, the illustrative expressions of the above-mentioned terms do not necessarily refer to the same embodiment or example. Moreover, the specific features, structures, materials, or characteristics described herein may be combined in any one or more embodiments or examples in a suitable manner.

Although the embodiments of the present application have been shown and described, those of ordinary skill in the art will understand that various changes, modifications, substitutions and modifications can be made to these embodiments without departing from the principles and purposes of the present application. The scope of the present application is defined by the claims and their equivalents.

## Claims

1. A battery, comprising:
at least one battery cell;
a box, wherein the battery cell is arranged in the box; and
a buffer structure fixedly connected to the box and protruding out of a side wall of the box.

2. The battery according to claim 1, wherein the box comprises a box main body and a bottom plate, the box main body and the bottom plate are fixedly connected, an accommodating cavity is formed between the box main body and the bottom plate, and the at least one battery cell is arranged in the accommodating cavity; and
the buffer structure is fixedly connected to the bottom plate.

3. The battery according to claim 2, wherein the buffer structure comprises a connecting portion and a buffer portion, the connecting portion is fixedly connected between the bottom plate and the buffer portion, the buffer portion and the side wall of the box are arranged opposite to each other, and a buffer space provided for deformation of the buffer portion is formed between the buffer portion and the side wall of the box.

4. The battery according to claim 3, wherein a direction perpendicular to the side wall is a width direction of the buffer space, and a width of the buffer space is 5 mm to 30 mm.

5. The battery according to claim 3 or 4, wherein a direction perpendicular to the bottom plate is a height direction of the buffer space, and a height of the buffer space is 5 mm to 30 mm.

6. The battery according to any one of claims 3 to 5, wherein the connecting portion extends in an arc shape in a direction from the buffer portion to the bottom plate.

7. The battery according to any one of claims 2 to 6, wherein the buffer structure and the bottom plate are of an integrated structure.

8. The battery according to any one of claims 2 to 7, wherein the box main body and the bottom plate are fixedly connected via a connecting structure, and the connecting structure is detachably connected to the box main body and the bottom plate.

9. The battery according to claim 8, wherein a threaded hole is formed in the box main body, a through hole is formed in the bottom plate, the connecting structure is a screw, and the connecting structure passes through the through hole and is threadedly connected to the box main body through the threaded hole.

10. The battery according to claim 8 or 9, wherein a head of the connecting structure protrudes out of a bottom surface of the bottom plate, a direction perpendicular to the bottom plate is a height direction of the connecting structure, and a height dimension of the head is less than or equal to 6 mm.

11. The battery according to claim 9, wherein the box main body comprises a side beam constituting the side wall, a hollow cavity is formed in the side beam, a connecting nut is provided in the hollow cavity, the connecting nut is provided with the threaded hole, a mounting hole in communication with the hollow cavity is formed in a bottom surface of the side beam, and the connecting nut is riveted to the side beam through the mounting hole.

12. The battery according to any one of claims 8 to 11, wherein a first sealing member is arranged between a bottom surface of the box main body and the bottom plate.

13. The battery according to any one of claims 1 to 12, wherein the buffer structure is provided with an avoidance notch, and the avoidance notch is used to avoid an installation structure of the battery.

14. The battery according to any one of claims 1 to 13, wherein the battery cell is spaced apart from the side wall of the box.

15. The battery according to claim 1, wherein the box comprises a box main body and a bottom plate, the box main body and the bottom plate are fixedly connected, an accommodating cavity is formed between the box main body and the bottom plate, the at least one battery cell is arranged in the accommodating cavity, and a bottom surface of the battery cell is spaced apart from the bottom plate.

16. The battery according to claim 15, wherein a distance between the bottom surface of the battery cell and the bottom plate is 10 mm to 25 mm.

17. The battery according to claim 1, wherein an accommodating cavity for accommodating the battery cell is formed in the box, and the box comprises a side beam constituting the side wall, the side beam comprises a first side beam, a second side beam, a third side beam, and a fourth side beam arranged sequentially in a circumferential direction of the box, a first hollow cavity isolated from an external environment is formed in the first side beam, a second hollow cavity isolated from the external environment is formed in at least one of the second side beam and the fourth side beam, and the first hollow cavity is in communication with the second hollow cavity, a wire passing hole in communication with the accommodating cavity is formed in a side wall of the second hollow cavity facing the accommodating cavity, the wire passing hole is used for passing a wiring harness of the battery, and the buffer structure protrudes out of the first side beam.

18. The battery according to claim 17, wherein a baffle is arranged between the first hollow cavity and the second hollow cavity to isolate the first hollow cavity from the second hollow cavity.

19. The battery according to claim 1, wherein the box comprises a top cover and a side beam constituting the side wall, the top cover covers a top portion of the side beam, the battery cell is inverted, and the battery cell is connected to the top cover.

20. The battery according to claim 19, wherein an adhesive layer is arranged between an upper surface of the battery cell and the top cover to connect the battery cell and the top cover.

21. The battery according to claim 19, wherein an accommodating cavity for accommodating the battery cell is formed in the box, the box comprises a top cover and a side beam constituting the side wall, the top cover covers a top portion of the side beam, and a second sealing member is arranged between the top cover and a top surface of the side beam.

22. A vehicle, comprising:
a vehicle body; and
the battery according to any one of claims 1 to 21, wherein the battery is fixedly mounted on the vehicle body.

23. The vehicle according to claim 22, wherein the vehicle has a vehicle head, and the buffer
structure is fixedly connected to an end of the box close to the vehicle head.
